# FASCICULE DE BREVET EUROPEEN

(11) **EP 1 962 061 B1**
(45) Date de publication et mention de la délivrance du brevet: **03.06.2009**
(21) Numéro de dépôt: 07300941.7
(22) Date de dépôt: 06.04.2007
(51) Int. Cl.: G01D 4/00

(54) **Procede de liaison pour tele - releve de compteurs**
Verbindungsverfahren zur Fernauszählung von Zählern
Link-up method for remote meter reading

(30) Priorité: 22.02.2007 EP 07300811
(43) Date de publication de la demande: 27.08.2008
(73) Titulaire: Actaris SAS, 92100 Boulogne Billancourt (FR)
(72) Inventeur: Rigomier, Vincent, 71118 Saint Martin Belle Roche (FR); Lerouge, Dominique, 71680 Crêches sur Saône (FR)
(74) Mandataire: Hervouet, Sylvie

(56) Documents cités:
- EP-A- 1 648 191
- EP-A- 1 705 461
- US-A1- 2005 179 561

## Description

La présente invention concerne un procédé de liaison pour le télé-relevé de compteurs d'eau, de gaz, d'énergie thermique ou d'électricité, ces compteurs pouvant être des compteurs domestiques ou industriels associés chacun à un module de communication par ondes radiofréquence.

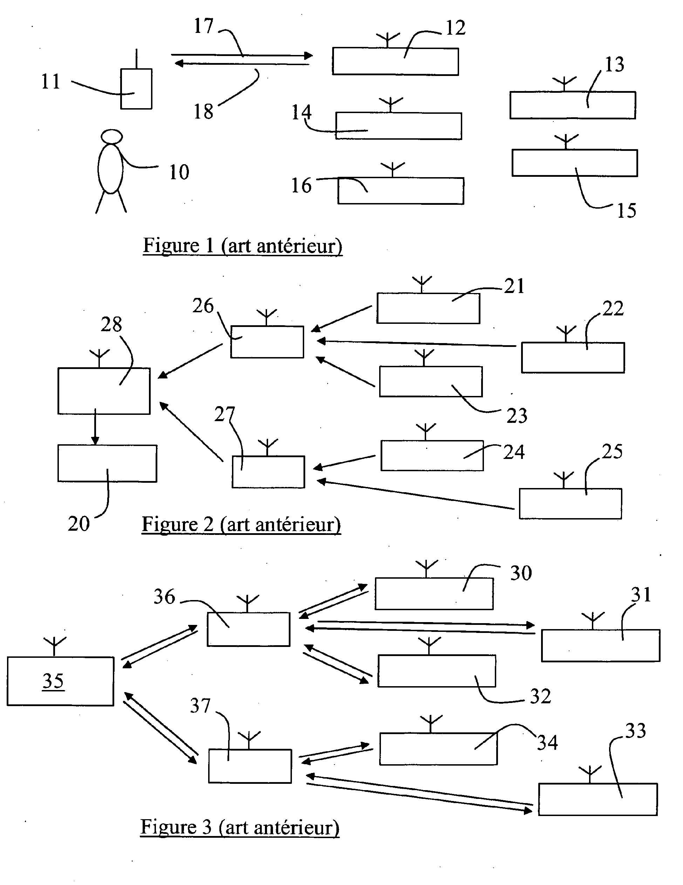

Il existe plusieurs types de télé-relevé de compteurs par radio fréquence :
- Le télé-relevé appelé « walk by » qui est illustré sur la figure 1: une personne 10, appelée le releveur, se déplace à pieds (d'où la dénomination "walk by" en anglais) et dispose d'un ordinateur ou terminal portable 11 muni d'une interface radio. Quand il passe à proximité d'un compteur ou d'un groupe de compteurs 12, 13, 14, 15 et 16 comportant chacun un module de communication radio, il les interroge à l'aide de son terminal 11 en envoyant un signal d'interrogation 17, ordonnant à ce ou ces compteur(s) d'envoyer leurs données. La distance entre le releveur et le compteur est rarement supérieure à une centaine de mètres. Le signal d'interrogation 17 est envoyé aux compteurs se trouvant dans la zone de couverture du signal de réveil et les compteurs répondent en envoyant un signal de réponse 18 à l'ordinateur. La communication radio entre les modules des compteurs et l'ordinateur portable est bidirectionnelle, c'est-à-dire qu'elle peut être établie dans le sens du module vers l'ordinateur et inversement.
- Le télé-relevé appelé « drive by » : le système est proche du « walk by » mais dans ce cas le releveur se déplace à l'aide d'un véhicule.
- Le télé-relevé appelé « réseau fixe » standard (« fixed network » en anglais) illustré sur la figure 2 : soit le releveur (non représenté) agit de son bureau, soit le système effectue automatiquement le télé-relevé via le système informatique qui comporte un ordinateur 20. Les compteurs équipés de modules de communication radio 21, 22, 23, 24 et 25 ne communiquent généralement pas directement avec l'ordinateur mais par l'intermédiaire de concentrateurs ou relais intermédiaires 26 et 27, chaque concentrateur enregistrant périodiquement les données de consommation d'un groupe de compteurs. Ainsi, sur la figure 2 les modules des compteurs 21, 22 et 23 communiquent avec le concentrateur intermédiaire 26 et les modules des compteurs 24 et 25 communiquent avec le concentrateur intermédiaire 27. Les modules émettent à un moment donné, déterminé de façon aléatoire ou à un moment configuré dans leurs mémoires. Les concentrateurs intermédiaires 26 et 27 communiquent avec un concentrateur principal 28, lequel communique avec l'ordinateur central 20 situé dans un bureau de l'opérateur du réseau. Les transmissions radio dans ce type de télé-relevé à réseau fixe sont unidirectionnelles selon le sens des flèches indiquées sur la figure 2 (des modules vers le concentrateur principal en passant par les concentrateurs intermédiaires). Le réseau est généralement complexe, souvent constitué d'une ligne filaire (téléphonique ou fibres optiques) reliant le concentrateur principal 28 à l'ordinateur central 20 et de liaisons radio unidirectionnelles des concentrateurs intermédiaires 26 et 27 vers le concentrateur principal 28 et des modules 21 à 25 des compteurs vers les concentrateurs intermédiaires.

Une variante de réalisation d'un réseau fixe est représentée sur la figure 3. Selon cette variante de réalisation, dite réseau fixe « walk-by », les modules de radio communication 30, 31, 32, 33 et 34 des compteurs sont lus un par un par radio à partir du concentrateur principal 35, par l'intermédiaire des concentrateurs intermédiaires 36 et 37. Les transmissions radio sont dans ce cas bidirectionnelles, comme indiquées sur la figure 3 par les liaisons à doubles flèches. Par exemple le document US 2005/0179561 décrit un tel réseau.

Les réseaux fixes standard à fonctionnement unidirectionnel présente l'avantage d'une faible consommation en énergie électrique des modules, comparée à celle d'un système bidirectionnel. Cette faible consommation permet une longue durée de vie des piles électriques équipant les modules, de l'ordre de dix années ou plus. Le remplacement fréquent des piles est un inconvénient sérieux puisqu'une personne doit se rendre au domicile où se trouve le compteur pour effectuer le changement de pile, ce qui coûte en main d'oeuvre. De plus, l'accès au compteur peut être compliqué (absences fréquentes des propriétaires, environnement hostile, ...). Les systèmes à réseau fixe ont donc la faveur des opérateurs.

Dans les architectures réseaux à concentration élevée, les modules 21-25 émettent à faible puissance (10 mW ou 25 mW), principalement dans les bandes de fréquences UHF (« Ultra High Frequency ») centrées autour des fréquences 433 MHz et 868 MHz. Ce qui permet de développer un module peu encombrant et à faible coût.

L'inconvénient de cette architecture est qu'elle demande la multiplication du nombre de concentrateurs intermédiaires pour augmenter la zone de couverture.

Afin d'augmenter le rayon de couverture du réseau et de limiter le nombre de concentrateurs intermédiaires, ces derniers ont une puissance d'émission plus importantes que celle du module radio monté sur le compteur. Cependant, la puissance maximale autorisée dans la bande UHF ISM 868 MHz est limitée à 500 mW.

Un autre inconvénient provient de la fréquence 868 MHz utilisée. En effet, les pertes de propagation en champ libre augmentent avec l'augmentation de la fréquence radio. Par conséquent, l'utilisation de la bande ISM 868 MHz, pour les concentrateurs intermédiaires, n'est pas favorable aux transmissions longues distances. Pour pallier cet inconvénient et puisque l'on est limité par la puissance maximale de 500 mW autorisée, la solution consiste à augmenter le nombre de concentrateurs intermédiaires pour relayer les informations des modules jusqu'au concentrateur principal. Cependant cette solution n'est pas satisfaisante puisqu'on augmente les coûts de construction et d'entretien du réseau et on diminue sa fiabilité.

L'objectif est de mettre en oeuvre un réseau fixe permettant de mettre en oeuvre un réseau de télé-relevé utilisant des modules à faible puissance tout en ayant un rayon de couverture important.

L'invention consiste à développer un système de type réseau fixe basé sur des modules à faible puissance travaillant dans la bande UHF et à utiliser des concentrateurs intermédiaires travaillant dans la bande VHF (« Very High Frequency »).

De façon plus précise, l'invention concerne un procédé de télé-relevé de compteurs selon lequel on utilise un réseau de communication par ondes radio, le réseau comportant des modules associés aux compteurs à télé-relever, un ordinateur et des concentrateurs. Selon l'invention, les communications radio entre les modules et les concentrateurs s'effectuent dans la bande de fréquence UHF alors que les communications radio entre les concentrateurs s'effectuent dans la bande de fréquence VHF.

Selon un mode de réalisation préféré, les concentrateurs sont constitués de concentrateurs intermédiaires communiquant avec les modules pour recueillir des données enregistrées dans les modules et d'au moins un concentrateur principal qui reçoit les données d'au moins un concentrateur intermédiaire avant leur acheminement vers l'ordinateur central.

Les communications radio entre les modules et les concentrateurs intermédiaires s'effectuent dans une bande UHF et les communications radio entre les concentrateurs intermédiaires eux-mêmes et entre les concentrateurs intermédiaires et le concentrateur principal ou les concentrateurs principaux s'effectuent dans une bande de fréquence VHF.

La bande de fréquence UHF comporte des fréquences supérieures à 310 MHz et la bande de fréquence VHF comporte des fréquences inférieures à 310 MHz.

La liaison entre l'ordinateur central et le concentrateur principal ou les concentrateurs principaux peut être une liaison de type GSM ou de type filaire.

Les communications radio entre les modules et les concentrateurs intermédiaires s'effectuent de préférence à une fréquence égale à ou voisine de 433 ou 868 MHz alors que les communications radio entre les concentrateurs intermédiaires eux-mêmes et entre les concentrateurs intermédiaires et le concentrateur principal ou les concentrateurs principaux s'effectuent à une fréquence égale à ou voisine de 169 MHz.

Plus particulièrement, on peut utiliser avantageusement la bande de fréquence VHF HERMES de 169.4 MHz à 169.8125 MHz qui autorise une puissance maximale de 500 mW pour les activités de comptage.

D'autres avantages et caractéristiques de l'invention apparaîtront au cours de la description qui suit d'un mode de fonctionnement de l'invention, donné à titre d'exemple non limitatif, en référence aux dessins annexés et sur lesquels :
- la figure 1 représente schématiquement un système de télé-relevé du type « walk-by » de l'art antérieur,
- la figure 2 représente schématiquement un système de télé-relevé du type réseau fixe standard de l'art antérieur,
- la figure 3 représente schématiquement un système de télé-relevé du type réseau fixe « walk-by » de l'art antérieur,
- la figure 4 représente un mode de fonctionnement selon l'invention.

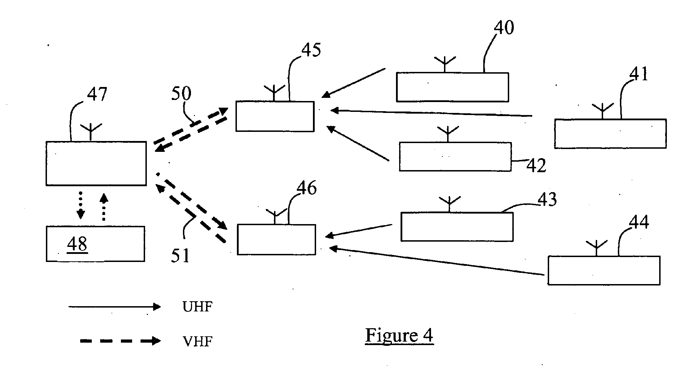

Sur la figure 4, le réseau comporte des modules de communication radio 40, 41, 42, 43 et 44, chaque module étant associé à un compteur. Les données de consommations mesurées par le compteur sont enregistrées dans le module. Des concentrateurs ou relais intermédiaires communiquent de façon unidirectionnelle avec les modules radio dans une bande de fréquence UHF, de préférence centrée autour de 433 MHz ou 868 MHz (liaisons radio indiquées par des flèches pleines). La puissance des émetteurs radio dans les modules est relativement faible, de l'ordre de 10 ou 25 mW. Ainsi, sur la figure 4, les modules 40, 41 et 42 communiquent par radio dans la bande UHF avec un concentrateur intermédiaire 45 pour envoyer leurs données, lesquelles sont stockées dans le concentrateur intermédiaire 45 et les modules 43 et 44 communiquent par radio dans la bande UHF avec le concentrateur intermédiaire 46 qui stocke les données des modules radio 43 et 44. Les concentrateurs intermédiaires 45 et 46 sont reliés par radio, de façon bidirectionnelle et dans une bande de fréquence VHF, avec un concentrateur principal 47 (liaisons indiquées par les flèches doubles 50 et 51 représentées par des traits), lequel est relié à un ordinateur central 48 situé dans les bureaux de l'opérateur du réseau. Selon un autre mode de réalisation (non représenté), les liaisons radio entre les concentrateurs intermédiaires 45 et 46 et le concentrateur principal 47 sont unidirectionnelles. Les flèches 50 et 51 ne sont alors plus doubles mais simples, dirigées des concentrateurs intermédiaires vers le concentrateur principal. La liaison bidirectionnelle entre l'ordinateur central 48 et le concentrateur principal 47, représentée en points ronds, peut être réalisée par câble (fils électriques ou fibres optiques) ou par radio, par exemple du type GPRS (« General Packet Radio Service »), qui est une norme de téléphone mobile dérivée du GSM.

On peut noter qu'il est possible de faire communiquer entre eux les concentrateurs intermédiaires, dans la bande VHF, de façon à concentrer les données dans un seul concentrateur intermédiaire qui devient en quelque sorte un concentrateur principal. Pour les réseaux important comportant un grand nombre de compteurs, il est possible d'utiliser plusieurs concentrateurs principaux, chaque concentrateur principal communiquant avec un groupe de modules et avec l'ordinateur central.

Selon l'invention, les liaisons radio des modules vers les concentrateurs (représentées en flèches pleines sur la figure 4) sont effectuées dans une bande de fréquence UHF, à faible puissance, alors que les communications radio des concentrateurs (soit entre deux concentrateurs intermédiaires, par exemple entre les concentrateurs intermédiaires 45 et 46 ou entre les concentrateurs intermédiaires et un concentrateur principal, par exemple entre les concentrateurs 45 et 46 et le concentrateur principal 47), représentées par des flèches dessinées avec des traits, sont effectuées dans une bande de fréquence VHF.

Par fréquences UHF, on entend des fréquences supérieures à 310 MHz et par fréquences VHF des fréquences inférieures à 310 MHz. Plus particulièrement, il est avantageux d'utiliser pour les liaisons entre concentrateurs la bande de fréquence VHF HERMES de 169.4 MHz à 169.8125 MHz qui autorise une puissance maximale de 500 mW pour les activités de comptage.

D'autres modes de fonctionnement que celui décrit et représenté peuvent être conçus par l'homme du métier sans sortir du cadre de la présente invention.

## Revendications

1. Procédé de télé-relevé de compteurs selon lequel on utilise un réseau de communication par ondes radio, le réseau comportant des modules (40-44) associés aux compteurs à télé-relever, un ordinateur (48) et des concentrateurs (45, 46), **caractérisé en ce que** les communications radio entre les modules (40-44) et les concentrateurs (45, 46) s'effectuent dans une bande de fréquence UHF alors que les communications radio entre les concentrateurs (45, 46, 47) s'effectuent dans une bande de fréquence VHF.

2. Procédé selon la revendication 1 **caractérisé en ce que** les concentrateurs sont constitués de concentrateurs intermédiaires (45, 46) communiquant avec les modules (40-44) pour recueillir des données enregistrées dans les modules et d'au moins un concentrateur principal (47) qui reçoit les données d'au moins un concentrateur intermédiaire avant leur acheminement vers l'ordinateur central (48).

3. Procédé selon la revendication 2 **caractérisé en ce que** les communications radio entre les modules (40-44) et les concentrateurs intermédiaires (45, 46) s'effectuent dans une bande de fréquence UHF et les communications radio entre les concentrateurs intermédiaires (45, 46) eux-mêmes et entre les concentrateurs intermédiaires (45-46) et le concentrateur principal (47) ou les concentrateurs principaux s'effectuent dans une bande de fréquence VHF.

4. Procédé selon l'une des revendications précédentes **caractérisé en ce que** la bande de fréquence UHF comporte des fréquences supérieures à 310 MHz et la bande de fréquence VHF comporte des fréquences inférieures à 310 MHz.

5. Procédé selon l'une des revendication précédentes **caractérisé en ce que** la liaison entre l'ordinateur central (48) et le concentrateur principal (47) ou les concentrateurs principaux est une liaison de type GSM.

6. Procédé selon l'une des revendications 1 à 4 **caractérisé en ce que** la liaison entre l'ordinateur central (48) et le concentrateur principal (47) ou les concentrateurs principaux est une liaison de type filaire.

7. Procédé selon la revendication 3 **caractérisé en ce que** les communications radio entre les modules (40-44) et les concentrateurs intermédiaires (45, 46) s'effectuent à une fréquence voisine ou égale à 433 ou 868 MHz alors que les communications radio entre les concentrateurs intermédiaires eux-mêmes (45, 46) et entre les concentrateurs intermédiaires (45, 46) et le concentrateur principal (47) ou les concentrateurs principaux s'effectuent à une fréquence égale ou voisine à 169 MHz.

## Claims

1. A method for remote-reading of meters, wherein a radio wave communications network is used, the network comprising modules (40-44) associated with the meters to be remote-read, a computer (48) and hubs (45, 46), **characterized in that** radio communications between modules (40-44) and hubs (45, 46) take place in a UHF frequency band while radio communications between hubs (45, 46, 47) take place in a VHF frequency band.

2. The method according to claim 1, **characterized in that** the hubs are composed of intermediate hubs (45, 46) communicating with the modules (40-44), in order to collect data recorded in the modules, and of at least one main hub (47) receiving the data from at least one intermediate hub before routing them to the central computer (48).

3. The method according to claim 2, **characterized in that** radio communications between modules (40-44) and intermediate hubs (45, 46) take place in a UHF frequency band and radio communications between the intermediate hubs (45, 46) themselves and between the intermediate hubs (45-46) and the main hub (47) or main hubs take place in a VHF frequency band.

4. The method according to any of the preceding claims, **characterized in that** the UHF frequency band comprises frequencies higher than 310 MHz, and the VHF frequency band comprises frequencies lower than 310 MHz.

5. The method according to any of the preceding claims, **characterized in that** the link between the central computer (48) and the main hub (47) or the main hubs is a GSM type link.

6. The method according to claims 1 to 4, **characterized in that** the link between the central computer (48) and the main hub (47) or the main hubs is a wire type link.

7. The method according to claim 3, **characterized in that** radio communications between modules (40-44) and intermediate hubs (45, 46) take place at a frequency close or equal to 433 or 868 MHz while radio communications between the intermediate hubs themselves (45, 46) and between the intermediate hubs (45, 46) and the main hub (47) or the main hubs take place at a frequency equal or close to 169 MHz.

## Patentansprüche

1. Verfahren zum Fernablesen von Zählern, wobei ein Funkkommunikationsnetz verwendet wird, wobei das Netz Module (40 bis 44), die den fern abzulesenden Zählern zugeordnet sind, einen Computer (48) und Hubs (45, 46) umfasst, **dadurch gekennzeichnet, dass** die Funkkommunikationen zwischen den Modulen (40 bis 44) und den Hubs (45, 46) in einem UHF-Frequenzband stattfinden, während die Funkkommunikationen zwischen den Hubs (45, 46, 47) in einem VHF-Frequenzband stattfinden.

2. Verfahren nach Anspruch 1, **dadurch gekennzeichnet, dass** die Hubs aus Zwischenhubs (45, 46), die mit den Modulen (40 bis 44) in Verbindung stehen, um in den Modulen aufgezeichnete Daten zu sammeln, und aus mindestens einem Haupthub (47), der die Daten von mindestens einem Zwischenhub empfängt, bevor er sie an den Zentralcomputer (48) weiterleitet, bestehen.

3. Verfahren nach Anspruch 2, **dadurch gekennzeichnet, dass** die Funkkommunikationen zwischen den Modulen (40 bis 44) und den Zwischenhubs (45, 46) in einem UHF-Frequenzband und die Funkkommunikationen zwischen den Zwischenhubs (45, 46) selber und zwischen den Zwischenhubs (45 und 46) und dem bzw. den Haupthub(s) (47) in einem VHF-Frequenzband erfolgt.

4. Verfahren nach einem der vorhergehenden Ansprüche, **dadurch gekennzeichnet, dass** das UHF-Frequenzband Frequenzen umfasst, die höher sind als 310 MHz, und dass das VHF-Frequenzband Frequenzen umfasst, die niedriger sind als 310 MHz.

5. Verfahren nach einem der vorhergehenden Ansprüche, **dadurch gekennzeichnet, dass** die Verbindung zwischen dem Zentralcomputer (48) und dem bzw. den Haupthub(s) (47) eine GSM-artige Verbindung ist.

6. Verfahren nach einem der Ansprüche 1 bis 4, **dadurch gekennzeichnet, dass** die Verbindung zwischen dem Zentralcomputer (48) und dem bzw. den Haupthub(s) (47) eine kabelartige Verbindung ist.

7. Verfahren nach Anspruch 3, **dadurch gekennzeichnet, dass** die Funkkommunikationen zwischen den Modulen (40 bis 44) und den Zwischenhubs (45, 46) auf einer Frequenz erfolgen, die nahe an oder gleich 433 oder 868 MHz ist, während die Funkkommunikationen zwischen den Zwischenhubs selber (45, 46) und zwischen den Zwischenhubs (45, 46) und dem bzw. den Haupthub(s) (47) auf einer Frequenz erfolgen, die nahe an oder gleich 169 MHz ist.
